# EUROPEAN PATENT APPLICATION

(11) **EP 4 793 503 A1**
(43) Date of publication of application: **19.08.2026**
(21) Application number: 26156681.4
(22) Date of filing: 05.02.2026
(51) Int. Cl.: F04B 53/16

(54) **COMPRESSOR WITH HIGH CORROSION RESISTANCE SCREWS AND METHOD FOR ITS ASSEMBLY**

(30) Priority: 14.02.2025 IT 202500002901
(71) Applicant: Officine Mario Dorin S.p.A, 50061 Fiesole (FI) (IT)
(72) Inventor: Dorin, Mario, 50065 Pontassieve (FI) (IT); Fornaciari, Fabio, 57124 Livorno (LI) (IT)
(74) Representative: Fanfani, Stefano

(57) **Abstract**

A compressor with hermetically sealing screws comprising a pre-applied layer of plastic material (1) deposited on the outer surface (29) of the portion of the screw shank in contact with the head (3) and on the under-head surface (4), and an assembly procedure for the compressor wherein, during tightening of the screws, the pre-applied plastic layer (1) fills the gaps between the under-head region and the underlying metallic surface, while simultaneously mixing and initiating the polymerization and hardening phase.

## Description

### Technical field

The present invention relates to the field of corrosion protection for mechanical devices comprising hermetically sealed screws whose heads extend out of the device, such as, for example, the tightening screws of compressor heads.

### Present status of the art

It is known that in many mechanical devices, such as semi-hermetic compressors and, more generally, in various types of compressors such as that shown in DE2131237A1, there are multiple elements that are made of ferrous alloys and are assembled together by means of screws that can be operated directly from the outside, so that they can be easily operated to assemble or disassemble the device.

In the case of compressors, a crucial aspect concerns oxidation, since these devices are often exposed to highly aggressive environments, typically when used in marine or saline atmospheres, or, for example, in the railway sector during the periodic washing operations to which rolling stock is subjected.

The tests to be passed without triggering corrosion include exposure to salt spray in accordance with technical standard UNI EN ISO 9227, with a duration of 500 hours without signs of oxidation in the screw under-head region and 1000 hours.

To achieve effective corrosion protection, it is known practice to paint the entire device after it has been fully assembled, using a special protective coating; however, there are portions of the device that cannot be effectively protected even when the entire device is painted.

These are, in particular, the gaps that form in the undercuts defined between the underside of the head of the screws and the metallic surface of the underlying component, such as the compressor head or a cover or other elements; industrial paint spray cannot penetrate these gaps effectively, also because the screw heads are often located, at least on one side, near to protrusions that hinder proper deposition of the coating during industrial painting, for example in a position adjacent to the compressor head, where the presence of the latter prevents the paint spray from easily reaching the underside of the head of the screw.

It must also be considered that, after the functional test of the compressor and before proceeding with painting of the entire device, an external phospho-degreasing treatment is required as a preparatory step for the subsequent painting phase, including a washing stage and, if necessary, a rinsing stage.

An improvement in oxidation resistance has been obtained by replacing blued steel screws with hot-galvanized screws; however, galvanization has also proven insufficient to guarantee the high performance required in certain circumstances, particularly due to the persistence of aggressive substances within the gaps.

Additional solutions, such as applying a sealant around the underside of the head of the screws after washing and before painting, once the compressor has been assembled, would create a bottleneck in the production flow due to the manual nature of the procedure and the high number of screws present on each compressor. Moreover, these known solutions still present drawbacks, mainly in terms of associated costs, charges for the disposal of various chemical products, and the impossibility of restoring corrosion resistance in the event of screw removal and reassembly.

Manual filling of the gaps with suitable sealing substances has proven to be a slow and costly procedure, poorly suited to industrial production.

### Objects and summary of the invention

The purpose of the present invention is therefore to provide a solution to the problem of protecting against corrosion within the gaps defined between the underside of the head of sealing screws and the metallic surface of the underlying component, such as a compressor head, a cover, or the like, which solution is effective, yet also economical and industrially feasible. The invention is applicable to compressors or, more generally, to joints involving unpainted metal-to-metal contact tightened by screws. The present technical solution is applicable in all cases where it is necessary to increase corrosion resistance, also in highly aggressive environments, of joints between two metallic elements, first assembled by tightening one or more screws or bolts and subsequently painted.

According to the present invention, these and other aims are achieved through the use of special galvanized screws with a coating of plastic material applied under the head, for example, based on nylon 11 or polyamide 11, or alternatively on polyolefin-based materials.

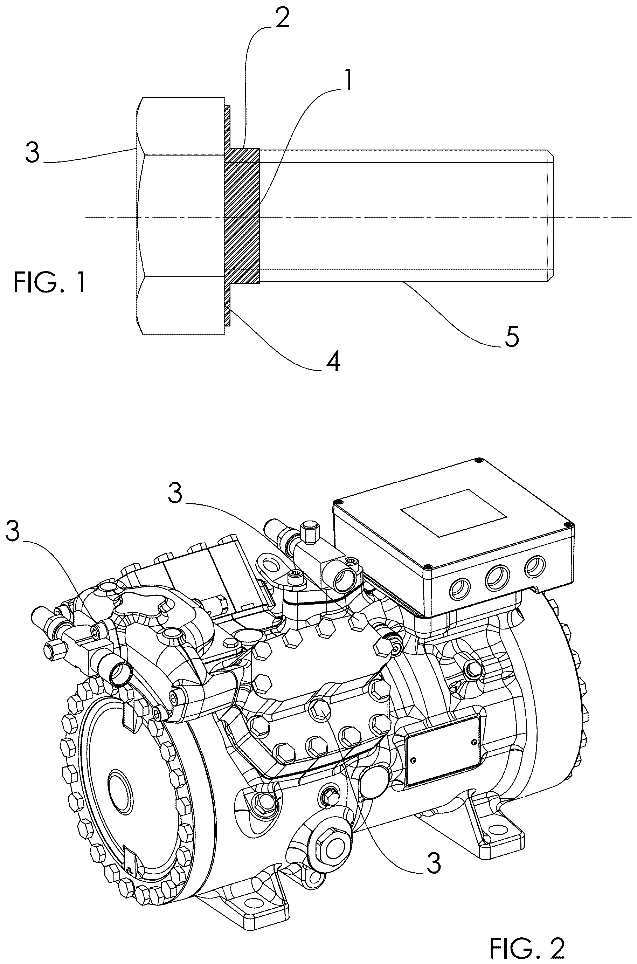

Preferably, the invention provides for the use of galvanized screws having a hexagonal head or a recessed hexagonal head; as shown in Fig. 1, the coating (1) is applied to the surface of the under-head region (4) and to the outer surface (2) of the portion of the shank (5) in contact with the head (3).

The thickness of the coating is generally between 0,2 mm and 2 mm.

According to a preferred embodiment, good results are obtained by applying a coating of pre-coated material based on microencapsulated epoxy resin of the type used as a thread-locking compound; the latter remains inert on the fastening device until the tightening caused by the engagement of the threads triggers the mixing of the resin, which then fills the under-head gaps and subsequently polymerizes and hardens so as to seal them, thereby eliminating the risk of oxidation.

A microencapsulated epoxy resin composition that has yielded good results comprises:

| | |
|---|---|
| - 30-40% | polyoxymethylene melamine urea; |
| - 30-40% | epoxy resin; |
| - 10-20% | 4,4'- methylenebis(cyclohexylamine); |
| - 5-10% | binder. |

The production cycle of the compressor then continues with functional and leak tests, followed by degreasing or phospho-degreasing, washing and, if necessary, rinsing, after which painting is carried out; the latter typically includes a first primer coat followed by a finishing enamel coat.

### Brief description of the drawings

Fig. 1 shows a longitudinal section of a screw in which the pre-applied plastic coating (1) is shown on the outer surface (2) of the portion of the shank (5) in contact with the head (3) and on the surface of the under-head region (4).
Fig. 2 shows a perspective view of a compressor comprising a casing, suction and discharge cocks for the refrigerant fluid, as well as compressor heads and other known components, assembled by means of a plurality of reversible hermetically sealed connections, in particular screw connections. The figure indicates the heads (3) of certain screws that are particularly difficult to protect from corrosion by painting alone. The present invention is generally applicable to any screw of the compressor whose head is exposed to the external environment.

### Detailed description of an embodiment of the invention

The following detailed description of an embodiment of the invention, provided solely by way of non-limiting example with reference to the accompanying drawings, highlights additional features and advantages deriving from the invention, which form an integral part thereof.

According to the present invention, the solution to the technical problem of reducing or eliminating corrosion in the gaps defined between the under-head region of sealing screws and the underlying metallic surface consists in the use of special screws to which a pre-applied coating of plastic material (1) has been applied. More specifically, said pre-applied plastic material is applied to the surface of the underside of the head (4) and to the outer surface (2) of the portion of the shank (5) in contact with the head (3), so that, during tightening of the screws, the plastic material fills the gaps.

Preferably, said pre-applied plastic material comprises a microencapsulated epoxy resin composition including the following weight percentages of the indicated components.

| | |
|---|---|
| - dal 30% al 40% | polyoxymethylene melamine urea; |
| - dal 30% al 40% | epoxy resin; |
| - dal 10% al 20% | 4,4'- methylenebis(cyclohexylamine); |
| - dal 5% al 10% | binder. |

During tightening of the screw, the pre-applied plastic material mixes and fills the gaps, simultaneously initiating the polymerization and hardening phase.

Good results have been obtained with pre-applied plastic material thicknesses of approximately 1 mm.

## Claims

1. Compressor comprising a plurality of reversible hermetically sealed screw connections, some of which have their heads exposed outside the compressor **characterised in that** at least one of said screws whose head (3) is exposed outside the compressor comprises a coating of pre-coated plastic material (1) applied on the surface of the underside (4) of the head of the screw and on the external surface (2) of the portion of the stem (5) in contact with the head (3).

2. Compressor according to the preceding claim **characterised in that** said pre-coated plastic material comprises a composition of microencapsulated epoxy resin in turn comprising the following percentages by weight of the indicated compounds:
- from 30% to 40% Polyoxymethylene melamine urea;
- from 30% to 40% Epoxy resin;
- from 10% to 20% 4,4'-methylene bis (cyclohexylamine);
- from 5% to 10% Binder.

3. Compressor according to claim 1 **characterised in that** said coating of pre-coated plastic material (1) comprises one or more of the following compounds: nylon 11, polyamide 11, polyolefins.

4. Compressor according to one of the preceding claims **characterized in that** the thickness of said pre-coated plastic material is between 0,2 mm and 2 mm.

5. Compressor according to one of the preceding claims **characterized in that** the thickness of said pre-coated plastic material is between 0,5 mm and 1 mm.

6. Method for assembling a compressor according to one of the preceding claims **characterized by** comprising the following phases:
a) depositing a pre-coated plastic coating (1) as per one of the preceding claims on the external surface (2) of the portion of the stem (5) in contact with the head (3) and on the surface of the underside (4) of the head of one or more of said screws;
b) tightening the screws triggering the mixing of the resin so that the latter fills the interstices under the head;
c) waiting until the resin has completed polymerization and has hardened.

7. Method for assembling a compressor according to the preceding claim, **characterized in that** after phase c) of waiting for the completion of polymerization, the following additional phases are provided:
d) degreasing (phosphodegreasing);
e) washing;
f) painting.
